# EUROPÄISCHE PATENTSCHRIFT

(11) **EP 2 814 681 B1**
(45) Veröffentlichungstag und Bekanntmachung des Hinweises auf die Patenterteilung: **01.06.2016**
(21) Anmeldenummer: 13701244.9
(22) Anmeldetag: 23.01.2013
(51) Int. Cl.: B60J 10/70, B60J 10/30, B60J 10/18, B60J 10/34

(54) **ABDICHTUNGSANORDNUNG FÜR FAHRZEUGSCHEIBEN, VERFAHREN ZU DEREN HERSTELLUNG UND DEREN VERWENDUNG**
SEALING ASSEMBLY FOR VEHICLE WINDOWS, CORRESPONDING MANUFACTURING METHOD AND APPLICATION
AGENCEMENT D'ÉTANCHÉITÉ POUR VITRES DE VÉHICULE, SON PROCÉDÉ DE FABRICATION ET SON UTILISATION

(30) Priorität: 13.02.2012 EP 12155069
(43) Veröffentlichungstag der Anmeldung: 24.12.2014
(73) Patentinhaber: Saint-Gobain Glass France, 92400 Courbevoie (FR)
(72) Erfinder: TIMMERMANN, Alwin, 50933 Köln (DE); DICKERS, Heinz-Erich, 52134 Herzogenrath (DE); BEHRENS, Andreas, 52393 Hürtgenwald (DE)
(74) Vertreter: Gebauer, Dieter Edmund
(86) Internationale Anmeldenummer: PCT/EP2013/051179
(87) Internationale Veröffentlichungsnummer: WO 2013/120671

(56) Entgegenhaltungen:
- EP-A1- 2 123 497
- DE-A1-102008 050 130
- DE-A1-102009 026 369
- FR-A1- 2 952 900

## Beschreibung

Die Erfindung betrifft eine Abdichtungsanordnung für Fahrzeugscheiben und ein Verfahren zu deren Herstellung sowie deren Verwendung gemäß den Oberbegriffen der unabhängigen Patentansprüche.

Bei modernen Fahrzeugen wird häufig an der Unterkante der Windschutzscheibe ein großflächiges Verkleidungsteil angebracht, das die Außenfläche der Windschutzscheibe bis unter die Motorhaube verlängert. Wegen der Handhabbarkeit beim Einbau, der Logistik und der Zugänglichkeit bei Wartungsarbeiten, beispielsweise an der Scheibenwischeranlage, wird das Verkleidungsteil mit der Windschutzscheibe lösbar verbunden. Für diesen Zweck wird an der Windschutzscheibe ein zumeist im Extrusionsverfahren hergestelltes Profil angebracht, das Vorrichtungen für die Verrastung mit einem entsprechend gestaltetem Rasthaken am Verkleidungsteil beinhaltet. Derartige Profile sind beispielsweise aus EP 1 240 041 B1 bekannt. Zudem werden solche Verkleidungsteile zunehmend flächenbündig an die Windschutzscheibe angefügt, was den zur Verfügung stehenden Bauraum weiter einschränkt.

Aus der EP 1 280 675 B1 ist eine Abdichtungsanordnung für Fahrzeugscheiben für den unteren Bereich einer Kraftfahrzeug-Windschutzscheibe bekannt, die über eine Halteschiene mit einer Wasserkasten-Abdeckung abdichtend verrastet ist. Die Halteschiene weist eine Dichtung auf, die zwischen der Scheiben-Unterkante und dem oberen Rand der Wasserkasten-Abdeckung angeordnet ist und die mit deren Außenflächen im Wesentlichen bündig abschließt. Diese Anordnung besitzt allerdings den Nachteil, dass zum funktionsgemäßen Einrasten und zur funktionsgemäßen Abdichtung nur sehr geringe Fertigungstoleranzen erlaubt sind. Es ist aber auch möglich, eine solche Dichtung nicht sichtbar anzuordnen, wie aus DE 10 2009 026 369 A1 bekannt ist.

Zur Verringerung der Rastkräfte wurde beispielsweise eine weiche Lippe eingesetzt, die mit entsprechend gestalteten Hinterschneidungen eines Rasthakens an dem Verkleidungsteil eine Verrastung bei niedrigem Kraftniveau ermöglicht, wie aus EP 2 123 497 A1 bekannt ist. Die weiche Lippe hat den Nachteil einer nur geringen Positioniergenauigkeit der Abdeckung.

Aufgabe der vorliegenden Erfindung ist es, unter Überwindung der Nachteile des Standes der Technik mit möglichst einfachen und wirtschaftlichen Mitteln eine verbesserte Abdichtungsanordnung für Fahrzeugscheiben bereitzustellen, wobei zum funktionsgemäßen Einrasten niedrigere Kräfte notwendig sind und gleichzeitig eine höhere Positioniergenauigkeit ermöglicht wird.

Die Aufgaben der Erfindung werden durch die Merkmale der unabhängigen Patentansprüche 1, 13 und 16 gelöst. Vorteilhafte Ausgestaltungen der Erfindung sind durch die Merkmale der Unteransprüche gegeben.

Die Aufgabe der Erfindung wird durch eine Abdichtungsanordnung für Fahrzeugscheiben gelöst, die mindestens folgende Merkmale umfasst:
- eine Halteschiene mit einem Rastkanal, der durch eine Führungsschiene und einen Federschenkel gebildet ist und die Halteschiene an einer Scheibe befestigt ist,
- eine Abdeckung mit einem Führungskanal, der durch eine Rastschiene und einen Positionierungsanschlag gebildet ist,
wobei
- im Führungskanal die Führungsschiene angeordnet ist und im Rastkanal die Rastschiene eingerastet ist,
- im Führungskanal ein Federelement zwischen einer Anlagefläche an der Unterseite der Abdeckung und der Führungsschiene eingespannt ist.

Die Verrastung der Rastschiene im Rastkanal erfolgt über einen Rasthaken an dem Federschenkel der in einen vorstehenden Bereich der Rastschiene eingerastet ist.

Die Aufgabe der Erfindung wird weiter durch ein Verfahren zur Herstellung einer Abdichtungsanordnung gelöst, wobei mindestens:
- die Halteschiene mit der Scheibe dauerhaft verbunden wird,
- die Führungsschiene der Abdeckung in den Führungskanal der Halteschiene eingeführt wird und eine definierte Position zwischen Hinterkante der Abdeckung und Unterkante der Scheibe entsteht,
- die Abdeckung mit der Rastschiene in den Rastkanal über den Rasthaken hinaus unter Anspannung des Federelementes zwischen der Führungsschiene und der Anlagefläche an der Unterseite der Abdeckung eingedrückt wird,
- die Abdeckung unter Entspannung des Federelements sich zurückbewegt und der Rasthaken in den vorstehenden Bereich der Rastschiene eingerastet wird.

Dadurch wird die Position der Abdeckung zur Halteschiene und der daran befestigten Scheibe durch die Führungsschiene und den Führungskanal festgelegt. Der Führungskanal ist durch eine geeignete Form des Positionierungsanschlags und der Rastschiene trichterförmig gestaltet, so dass die Führungsschiene in eine definierte Position gelangt.

Der Verrastungsmechanismus aus Rastschiene und Rastkanal bildet eine dauerhafte und nur unter hohem Kraftaufwand wieder lösbare Verbindung von Abdeckung und Halteschiene. Der Verrastungsmechanismus verhindert ein Lösen der Abdeckung entgegen der Montagerichtung, in der die Abdeckung auf die Halteschiene geführt wird. Der Federschenkel und der daran angeordnete Rasthaken werden durch das Federelement lediglich mit einer Zugspannung belastet und können deshalb sehr dünn und filigran ausgestaltet werden. Durch die feste Positionierung der Führungsschiene im Führungskanal muss der Verrastungsmechanismus keine Querkräfte zur Montagerichtung aufnehmen.

In einer vorteilhaften Ausgestaltung der Erfindung ist die Halteschiene über eine Klebeverbindung mit der Scheibe verbunden. Die Klebeverbindung wird bevorzugt als Klebefilm oder Klebe-Raupe auf der Halteschiene aufgebracht. Übliche Dicken der Klebefilme sind 0,3 mm bis 2 mm.

Die Abdeckung und/oder die Halteschiene enthalten bevorzugt ein Polymer, besonders bevorzugt Polypropylen, Polyvinylchlorid, Acrylnitril-Butadien-Styrol, Copolymere und / oder Gemische. Die Abdeckung und/oder die Halteschiene bestehen bevorzugt aus Polypropylen.

In einer bevorzugten Ausgestaltung der Erfindung ist das Federelement fest mit der Führungsschiene der Halteschiene verbunden. Besonders bevorzugt ist es auf die Führungsschiene aufgeklebt, anextrudiert und / oder als vorgefertigtes Dichtprofil in eine entsprechende Nut eingebracht. In einer alternativen bevorzugten Ausgestaltung ist Federelement mit der Anlagefläche der Abdeckung verbunden. Auch hier ist es bevorzugt auf die Anlagefläche aufgeklebt, in einem Spritzgussverfahren hergestellt und / oder als vorgefertigtes Dichtprofil in eine entsprechende Nut eingebracht.

Das Federelement ist vorteilhafterweise als Vollmaterial, als Hohlkammerprofil oder als U-förmiges Profil ausgeführt sein. Das Federelement kann jegliche Formen aufweisen, die eine erfindungsgemäße abdichtende und federnde Wirkung in der Abdichtungsanordnung erzielen. Das Federelement kann bevorzugt im Profilquerschnitt rund, oval, rechteckig oder V-förmig sein.

Der zur Federwirkung und Abdichtung nötige Druck zwischen der Anlagefläche der Abdeckung und der Führungsschiene der Haltschiene wird durch eine elastische Deformation des Federelementes erzeugt. Zur Auslegung der Federcharakteristik sind insbesondere das Material, die Form, die Wandstärke bei Hohlkammerprofilen sowie das Volumen des Federelementes aufeinander abgestimmt. Gleichzeitig dient das Federelement als Dichtelement, beispielsweise zur Abdichtung gegen Feuchtigkeit wie Regen oder Schnee.

In einer bevorzugten Ausgestaltung enthält das erfindungsgemäße Federelement Elastomere, thermoplastische Elastomere und bevorzugt Ethylen-Propylen-Dien-Kautschuk, Styrol-Butadien-Kautschuk, Polybutadien-Kautschuk, Nitrilkautschuk, Chloropren-Kautschuk, Fluorkautschuk, Silikonkautschuk, Polypropylen, Polyvinylchlorid, Acrylnitril-Butadien-Styrol, Copolymere und / oder Gemische davon.

Die Abdichtungsanordnung dichtet die Fahrzeughülle vornehmlich gegen Feuchtigkeit wie Regen und Schnee sowie jegliche Arten von Verunreinigungen aus der Umgebung ab. In der Wirkung kann die Anordnung aber auch auf die Form, die Reduzierung von Windgeräuschen sowie die Vibrationsausbreitung der Fahrzeughülle Einfluss haben.

In einer vorteilhaften Ausgestaltung der Erfindung beträgt der Winkel α zwischen dem Positionierungsanschlag und der Lotrechten zur Anlagefläche von 0° bis 45°, bevorzugt von 2° bis 25°. Die dadurch gebildete Keilform hat den besonderen Vorteil, dass die Führungsschiene durch die Kraftwirkung des Federelements am Positionierungsanschlag entlang in ihre gewünschte Position geführt wird. Dies hat den besonderen Vorteil, dass die Toleranz quer zur Montagerichtung deutlich reduziert wird.

Die Länge des Positionierungsanschlags beträgt vorteilhafterweise von 1 mm bis 6 mm, bevorzugt von 2 mm bis 4 mm. Der Positionierungsanschlag ist bevorzugt so lange ausgebildet, dass die Führungsschiene in den Führungskanal eingeführt ist, bevor die Rastschiene in den Rastkanal gelangt.

In einer vorteilhaften Ausgestaltung weist die erfindungsgemäße Abdeckung mindestens einen Montageanschlag auf. Der Montageanschlag ist an dem Positionierungsanschlag angeordnet. Der Montageanschlag ist bevorzugt länger als der Positionierungsanschlag, bevorzugt um mehr als 50% und besonders bevorzugt um mehr als 100%. Der Montageanschlag ist bevorzugt weiter in Richtung Führungskanal geneigt. Der Montageanschlag stellt sicher, dass Führungsschiene und Führungskanal sowie Rastschiene und Rastkanal so zueinander angeordnet sind, dass sie beim Absenken der Abdeckung auf die Halteschiene passend und formschlüssig ineinander gleiten. Dadurch wird insbesondere verhindert, dass die Rastschiene außerhalb des Rastkanals und zwischen Federschenkel und Scheibe eingeführt wird, was zu einer Verbiegung und Zerstörung des Federschenkels führen kann.

In einer bevorzugten Ausgestaltung weist die Abdeckung drei bis sieben und insbesondere drei Montageanschläge auf. Die Montageanschläge sind bevorzugt im Endbereich entlang der Erstreckungsrichtung der Abdeckung und in der Mitte angeordnet. Die äußeren Montageanschläge sind bevorzugt weniger als 20% der Länge der Abdeckung von den Enden der Abdeckung entfernt angeordnet. Dies ermöglicht ein besonders einfaches Einführen der Führungsschiene in den Führungskanal und der Rastschiene in den Rastkanal. Dies gilt insbesondere, wenn die Montage wie üblich an einem der beiden Enden der Abdeckung oder in der Mitte beginnt.

Der Rasthaken und der vorstehende Bereich können beliebig im Rastkanal orientiert sein. In einer bevorzugten Ausgestaltung ist der Rasthaken an der von der Scheibe weg weisenden Seite des Rastkanals am Federschenkel angebracht und der vorstehende Bereich der Rastschiene ist zur Scheibe hin ausgerichtet.

Der Federschenkel ist auslenkbar mit der Abdeckung verbunden ist. Auslenkbar bedeutet hierbei, dass sich der Federschenkel an der Verbindungsstelle zur Halteschiene beispielsweise im Rastvorgang verbiegen lässt, ohne von der Halteschiene abzubrechen oder sich dauerhaft zu verformen. Alternativ oder zusätzlich kann der Federschenkel flexibel ausgestaltet und sich teilweise oder auf voller Länge reversibel verbiegen.

Der Federschenkel enthält bevorzugt Polypropylen, Polyvinylchlorid, Acrylnitril-Butadien-Styrol, Copolymere und / oder Gemische oder Metalle, bevorzugt Aluminium, Stahl oder Kupferlegierungen wie Federbronze oder Messing. In einer vorteilhaften Ausgestaltung besteht der erfindungsgemäße Federschenkel aus Metall, bevorzugt aus einer Metallfolie und besonders bevorzugt eine Folie aus Aluminium-, Stahlblech- oder Kupferlegierungen wie Federbronze.

Der Federschenkel weist zur Einstellung der Auslenkeigenschaften bevorzugt eine Profilstärke von 0,2 mm bis 1 mm in dem für die Auslenkung vorgesehnen Bereich auf. Der für die Auslenkung vorgesehene Bereich kann die Verbindungsstelle des Federschenkels zur Halteschiene sein oder sich über einen Teilbereich oder die gesamte Länge des Federschenkels erstrecken.

In einer vorteilhaften Ausgestaltung der Erfindung enthalten die Halteschiene, die Führungsschiene und/oder der Federschenkel mindestens eine Versteifungs-Einlage. Die Versteifungseinlage kann ein Metall, bevorzugt eine Metallfolie und besonders bevorzugt eine Folie aus Aluminium-, Stahlblech- oder Kupferlegierungen wie Federbronze oder Verstärkungsfaser, bevorzugt Glas-, Kevlar- oder Carbonfasern enthalten. Die Versteifungseinlage hat den besonderen Vorteil, dass die Materialstärken für Halteschiene und Federschenkel reduziert werden können und die Stabilität beziehungsweise Federstärke gleichbleibend oder erhöht sein kann.

Der Abstand D zwischen der unteren Kante der Scheibe und der Hinterkante der Abdeckung beträgt bevorzugt von 0,05 mm bis 5 mm und besonders bevorzugt von 0,1 mm bis 2 mm. Der Abstand wirkt dabei in der Fahrzeughülle als optisch nicht oder kaum sichtbare Fuge oder aber als gewollte Fuge, die zu Form-Zwecken sichtbar ist. Die Hinterkante der Abdeckung ist bevorzugt rund, keilförmig oder rechtwinkelig ausgestaltet. Diese Ausgestaltungen erlauben insbesondere, die Notwendigkeit einer kaum sichtbaren Fuge mit einer ausreichenden Fertigungstoleranz bei der Montage der Abdichtungsanordnung zu kombinieren.

In einer vorteilhaften Ausgestaltung ist der erfindungsgemäße Rasthaken im Rastkanal abgerundet ausgebildet. Der Rasthaken ist bevorzugt derart abgerundet, dass er zusammen mit dem vorstehenden Bereich der Rastschiene ein Drehgelenk bildet. Durch die gelenkartige Annordung des Rasthakens und der Rastschiene kann die Rastschiene auch unter schrägen Winkeln in den Rastkanal eingebracht und unter Beibehaltung der vorbestimmten Position verrastet werden.

In einer anderen bevorzugten Ausgestaltung der Erfindung sind die vorstehenden Bereiche an der Rastschiene nur segmentweise ausgebildet. Die Segmente mit nicht ausgebildetem vorstehendem Bereich können eine Länge von 5 mm bis zu 50 mm, bevorzugt von 15 mm bis 30 mm haben. Bei der Montage der Abdeckung biegt der vorstehende Bereich der Rastschiene einen Federschenkel der Haltschiene auf. Mit der oben genannten Segmentierung wird bei dem Montagevorgang erreicht, dass immer ein Segment mit vorstehendem Bereich bereits verrastet ist, bevor das nächste Segment mit vorstehendem Bereich beginnt den Federschenkel aufzubiegen. Die Verrastung eines Segments mit vorstehendem Bereich erfolgt jeweils mit einem akustischen Knacken, das eine wirksame Kontrolle für einen erfolgten Rastvorgang darstellt.

In einer weiteren vorteilhaften Ausgestaltung der Erfindung sind Teilabschnitte der Rastschiene ausgespart. Die Aussparungen können schlitzartig mit einer Breite von 0,5 mm bis 2 mm ausgeführt sein. Die Aussparungen und die Segmente der Rastschiene können aber auch eine Länge von 2 mm bis zu 50 mm haben. Ein Vorteil einer segmentierten Rastschiene liegt in der verbesserten Biegsamkeit der Rastschiene während des Montagevorgangs.

In einer bevorzugten Ausführungsform wird die Halteschiene mit einem Montagekeder oder einem ortsfestem Führungselement zur Scheibe positioniert. Ein ortsfestes Führungselement bedeutet hier, dass ein Montagehilfsmittel für die Halteschiene eine ortsfeste Lage relativ zur Lage der Scheibe aufweist.

Das Montagehilfsmittel ermöglicht die genaue Positionierung der Halteschiene zur Scheibe vor dem Verkleben der Teile. Ein Montagekeder bedeutet ebenfalls ein Montagehilfsmittel vor dem Verkleben der Teile. Der Montagekeder ist ein in den Rastkanal eingebrachter und wieder entfernbarer Abstandshalter zur Scheibenkante.

In einer bevorzugten Ausführungsform wird insbesondere die in Teilbereichen ausgesparte Rastschiene der Abdeckung unter leichtem Verbiegen in Segmenten in den Rastkanal eingerastet. Mit dem Verbiegen und Einrasten einer segmentierten Rastschiene wird ein deutlich wahrnehmbares akustisches Knacken erzeugt. Das akustische Knacken signalisiert das Einrasten und ist im Rahmen einer Qualitätskontrolle der Verrastung sehr hilfreich.

In einer vorteilhaften Ausführungsform des erfindungsgemäßen Verfahrens wird vor dem Einführen der Führungsschiene in den Führungskanal, die Führungsschiene an einem Montageanschlag entlang geführt. Dies stellt sicher, dass Führungsschiene und Führungskanal sowie Rastschiene und Rastkanal so zueinander angeordnet sind, dass sie beim Absenken der Abdeckung auf die Halteschiene passend und formschlüssig ineinander gleiten. Dadurch wird insbesondere verhindert, dass die Rastschiene außerhalb des Rastkanals und zwischen Federschenkel und Scheibe eingeführt wird, was zu einer Verbiegung und Zerstörung des Federschenkels führen kann.

In einer weiteren vorteilhaften Ausführungsform des erfindungsgemäßen Verfahrens wird die Abdeckung mit der Halteschiene segmentweise verbunden wird. Dies hat den besonderen Vorteil, dass mit dem Verbiegen und Einrasten einer segmentierten Rastschiene ein deutlich wahrnehmbares akustisches Knacken erzeugt wird. Das akustische Knacken signalisiert das Einrasten und ist im Rahmen einer Qualitätskontrolle der Verrastung sehr hilfreich.

Besonders bevorzugt wird das Verfahren zum Einbau einer Abdichtungsanordnung im unteren Bereich einer Kraftfahrzeug-Windschutzscheibe eingesetzt.

Des Weiteren umfasst die Erfindung die Verwendung der Abdichtungsanordnung im unteren Bereich einer Kraftfahrzeug-Windschutzscheibe und im hinteren Bereich einer Abdeckung, insbesondere einer Wasserkasten-Abdeckung.

Es versteht sich, dass die verschiedenen Ausgestaltungen einzeln oder in beliebigen Kombinationen realisiert sein können. Insbesondere sind die vorstehend genannten und nachstehend zu erläuternden Merkmale nicht nur in den angegebenen Kombinationen, sondern auch in anderen Kombinationen oder in Alleinstellung einsetzbar, ohne den Rahmen der vorliegenden Erfindung zu verlassen.

Im Folgenden wird die Erfindung anhand einer Zeichnung näher erläutert. Die Zeichnung ist eine schematische Darstellung und nicht maßstabsgetreu. Die Zeichnung schränkt die Erfindung in keiner Weise ein.

Es zeigen:
Figur 1 eine Draufsicht auf eine erfindungsgemäße Abdichtungsanordnung für eine Kraftfahrzeug-Windschutzscheibe,
Figur 2 einen Querschnitts einer erfindungsgemäßen Abdichtungsanordnung nach Figur 1,
Figur 3a eine Detailansicht eines Querschnitts einer erfindungsgemäßen Abdeckung,
Figur 3b eine weitere Detailansicht eines Querschnitts einer erfindungsgemäßen Halteschiene,
Figur 3c eine weitere Detailansicht eines Querschnitts einer erfindungsgemäßen Abdichtungsanordnung nach Figur 2,
Figur 4 eine räumliche Darstellung eines Querschnitts einer erfindungsgemäßen Abdichtungsanordnung,
Figur 5 eine räumliche Darstellung eines Ausgestaltungsbeispiels einer erfindungsgemäßen Abdeckung,
Figur 6 einen weiteren Querschnitts einer erfindungsgemäßen Abdichtungsanordnung nach Figur 1,
Figur 7 einen Querschnitts eines weiteren Ausgestaltungsbeispiels einer erfindungsgemäßen Abdichtungsanordnung und
Figur 8 einen Querschnitt einer erfindungsgemäßen Halteschiene mit einem Montagekeder und
Figur 9 ein Flussdiagramm eines Ausführungsbeispiels des erfindungsgemäßen Verfahrens.

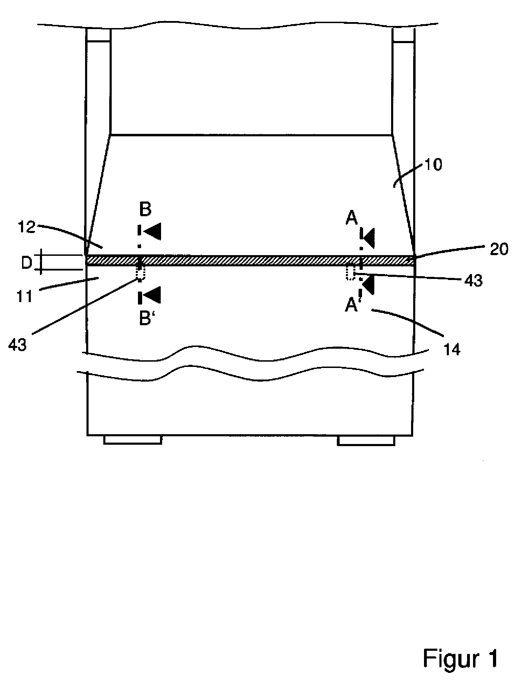

Figur 1 zeigt eine Draufsicht auf eine erfindungsgemäße Ausgestaltung einer Abdichtungsanordnung für eine Scheibe 10. Die Scheibe 10 ist beispielsweise die Windschutzscheibe eines Kraftfahrzeugs. Der untere Rand 12 der Scheibe 10 ist mit einem Abstand D von 0,3 mm über eine Halteschiene 20 mit einer Abdeckung 14 verbunden. Innerhalb der Fuge ist ein Teilbereich der Halteschiene 20 dargestellt.

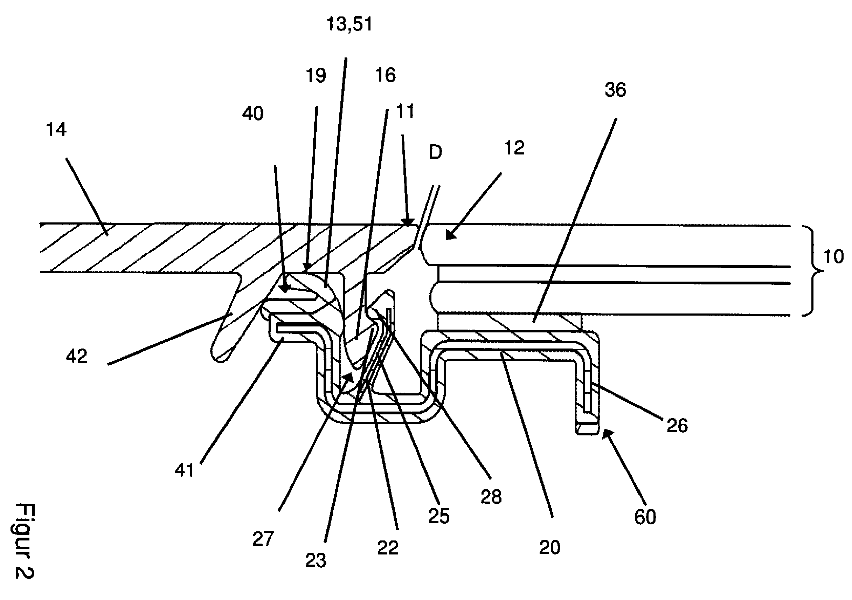

Figur 2 zeigt einen Querschnitt einer erfindungsgemäßen Abdichtungsanordnung entlang der Schnittlinie A-A' aus Figur 1. Die Scheibe 10 ist am unteren Rand 12 über eine Halteschiene 20 mit einer Abdeckung 14 verbunden. Die Abdeckung 14 ist beispielsweise eine Wasserkasten-Abdeckung oder ein sonstiges Verkleidungsteil im Bereich der Windschutzscheibe eines Fahrzeugs. Die Scheibe 10 ist beispielsweise eine Verbundsicherheitsglasscheibe aus zwei Einzelscheiben, die über eine thermoplastische Zwischenschicht miteinander verbunden sind. Die Scheibe 10 kann auch eine Einzelglasscheibe aus vorgespanntem Sicherheitsglas sein, beispielsweise bei der Verwendung der erfindungsgemäßen Abdichtungsanordnung bei einer Heckscheibe.

Die Halteschiene 20 enthält einen Rastkanal 27. Eine Flanke des Rastkanals 27 wird durch die zur Scheibe 10 gewandte Seite einer Führungsschiene 41 gebildet. Die gegenüberliegende Flanke wird durch einen Federschenkel 25 gebildet. Am Federschenkel 25 ist in Richtung des Innenraums des Rastkanals 27 ein Rasthaken 28 angeordnet.

Die Halteschiene 20 enthält ein Polymer und besteht beispielsweise aus Polypropylen. Die Halteschiene 20 ist mittels einer 0,8 mm dicken Klebeverbindung 36 mit einem Acrylatklebstoff mit der Innenseite der Scheibe 10 an deren unterem Rand 12 verbunden.

Die Abdeckung 14 enthält ein Polymer und besteht beispielsweise aus Polypropylen. Die Abdeckung 14 enthält eine Rastschiene 16 mit einem zu der Scheibe 10 hin ausgerichteten vorstehenden Bereich 23. Die Rastschiene 16 bildet mit einem Positionierungsanschlag 42 einen Führungskanal 40. Der Positionierungsanschlag 42 ist auf der der Scheibe 10 abgewandten Seite des Führungskanals 40 angeordnet.

Die Führungsschiene 41 der Halteschiene 20 ist im Führungskanal 40 der Abdeckung 14 angeordnet. Dadurch wird der laterale Abstand D der Abdeckung 14 zur Scheibe 10 festgelegt. Lateral bedeutet hier, die Richtung der Oberfläche der Scheibe 10 über deren unteren Rand 12 hinaus zur Abdeckung 14. Der mittlere Abstand D zwischen der Kante am unteren Rand 12 der Scheibe 10 und der Hinterkante 11 der Abdeckung 14 beträgt beispielsweise 0,3 mm. Zwischen der Hinterkante 11 der Abdeckung 14 und der Kante am unteren Rand 12 der Scheibe 10 befindet sich ein freier Spalt ohne Dichtmaterial.

Des Weiteren ist die Rastschiene 16 der Abdeckung 14 im Rastkanal 27 der Halteschiene 20 eingerastet. Dazu wird bei der Montage der Abdeckung 14 ein Federelement 13 zwischen Führungsschiene 41 und Anlagefläche 19 der Abdeckung 14 komprimiert. Das Federelement 13 ist in gespanntem Zustand 51 und drückt dauerhaft auf die Anlagefläche 19 an der Unterseite des Führungskanals 40 der Abdeckung 14. Dadurch wird ein vorstehender Bereich 23 der Rastschiene 16 gegen einen Rasthaken 28 gezogen. Der Rasthaken 28 ist als Aufkantung am Federschenkel 25 ausgeführt. Durch die Zugbelastung des vorstehenden Bereichs 23 der Rastschiene 16 gegen den Rasthaken 28 wird eine sichere Befestigung der Abdeckung 14 in der Halteschiene 20 erreicht. Insbesondere ist die Abdeckung 14 gegen ein Herausrutschen entgegen der Montagerichtung gesichert. Montagerichtung bedeutet hier die Richtung, in der die Rastschiene 16 in den Rastkanal gesteckt wird. Die sichere Positionierung gewährleistet, dass die Oberflächen im unteren Bereich der Scheibe 10 und im hinteren Bereich der Abdeckung 14 beispielsweise in einer Flucht angeordnet bleiben.

Der Federschenkel 25 wird nach der Verrastung mit der Rastschiene 16 nur noch auf Zug belastet und nimmt keine Querkräfte auf. Querkräfte werden durch eine definierte Positionierung der Führungsschiene 41 im Führungskanal 40 aufgenommen. Deshalb kann der Federschenkel 25 sehr dünn ausgebildet werden. Es werden nur geringe Kräfte benötigt um die Rastschiene 16 im Rastkanal 27 einzurasten. Die Profilstärke im Verbindungsbereich 22 zwischen Federschenkel 25 und Halteschiene 20 beträgt beispielsweise 0,5 mm.

Der Rastkanal 27 wird von der Rastschiene 16 nur zu beispielsweise etwa 50% in seiner Tiefe ausgefüllt. Der Rasthaken 28 hält die Rastschiene 16 unter dem Druck des Federelements 13 und des Federschenkels 25 dauerhaft in einer definierten VerrastungsPosition des Rastkanals 27.

Das Federelement 13 besteht beispielsweise aus Ethylen-Propylen-Dien-Kautschuk. Durch den großen Federweg des Federelements 13 ist es möglich, auch bei großen Toleranzen von Rastschiene 16 und Halteschiene 20 eine sichere Verrastung bei der Montage zu erreichen. Gleichzeitig dichtet das elastische Material des Federelements 13 den Führungskanal 40 gegen Feuchtigkeit und Wasser ab. Wasser, dass in den Bereich zwischen Scheibe 10 und Abdeckung 14 eindringt, kann deshalb nicht über den Führungskanal 40 in den Bereich unterhalb der Abdeckung 14 eindringen. So kann beispielsweise auf weitere, zusätzliche Abdichtungsmaßnahmen verzichtet werden.

Der Federschenkel 25 und die Halteschiene 20 können eine Versteifungseinlage 26 enthalten, beispielsweise eine Einlage aus einer Aluminiumfolie.

An der Halteschiene 20 kann im Bereich unterhalb der Scheibe 10 ein Stützschenkel 60 angeordnet sein. Der Stützschenkel 60 dient der Abstandfixierung zwischen der Scheibe 10 und einer hier nicht dargestellten Traverse eines Kraftfahrzeugs, an die die Scheibe 10 angeklebt wird. Der Stützschenkel 60 dient insbesondere der Abstandshalterung während des Abbindens des Klebers.

Eine optionale Stützwölbung 15 hält die Rastschiene 16 unter dem Druck des Federelements 13 und des Federschenkels 25 dauerhaft in einer definierten Verrastungsposition im Rastkanal 27. Der Stützwölbung 15 ist als Aufkantung an der Führungsschiene 41 ausgeführt. Die Stützwölbung 15 und der vorstehende Bereich 23 der Rastschiene 16 sind verrundet ausgeführt, sodass unabhängig von der mehrdimensionalen Krümmung der Scheibe 10 eine Verrastung erzielt wird.

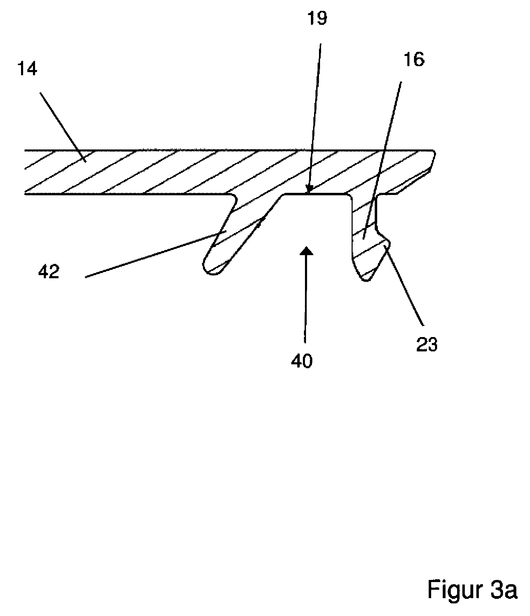

Figur 3a zeigt eine Detailansicht eines Querschnitts der Abdeckung 14 aus Figur 2. Der Positionierungsanschlag 42, die Anlagefläche 19 auf der Unterseite der Abdeckung 14 und die Rastschiene 16 bilden einen trapezförmigen Führungskanal 40. An der dem Führungskanal 40 abgewandten Seite der Rastschiene 16 ist ein vorstehender Bereich 23 angeordnet.

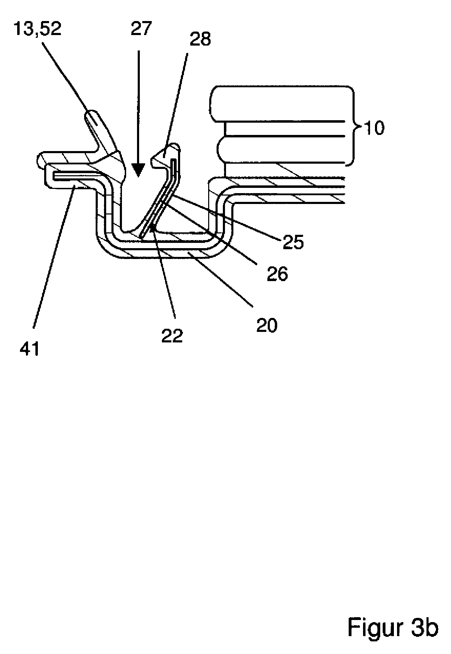

Figur 3b zeigt eine Detailansicht eines Querschnitts der Halteschiene 20 aus Figur 2 vor dem Verrasten mit einer hier nicht dargestellten Abdeckung 20. Das Federelement 13 ist in einem nicht gespannten Zustand 52. Die Führungsschiene 41 bildet mit dem Federschenkel 25 einen Rastkanal 27 aus. Auf der dem Rastkanal 27 zugewandten Seite des Federschenkels 25 ist ein Rasthaken 28 ausgeformt. Federschenkel 25 und Halteschiene 20 können eine Versteifungseinlage 26 enthalten.

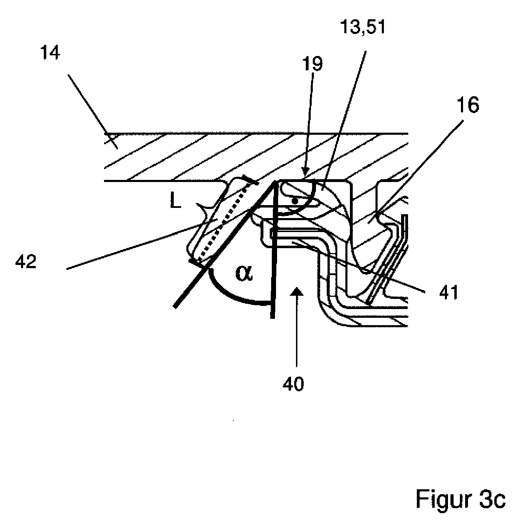

Figur 3c zeigt eine Detailansicht des Querschnitts aus Figur 2 im Bereich des Positionierungsanschlags 42. Der Positionierungsanschlag 42 bildet mit der Lotrechten zur Anlagefläche 19 der Abdeckung 14 einen Winkel α von beispielsweise 15°. Der Positionierungsanschlag 42 hat beispielsweise eine Länge L von 4 mm. Die Rastschiene 16 ist beispielsweise auf der dem Führungskanal 40 zugewandten Seite Lotrecht zur Anlagefläche 19 angeordnet.

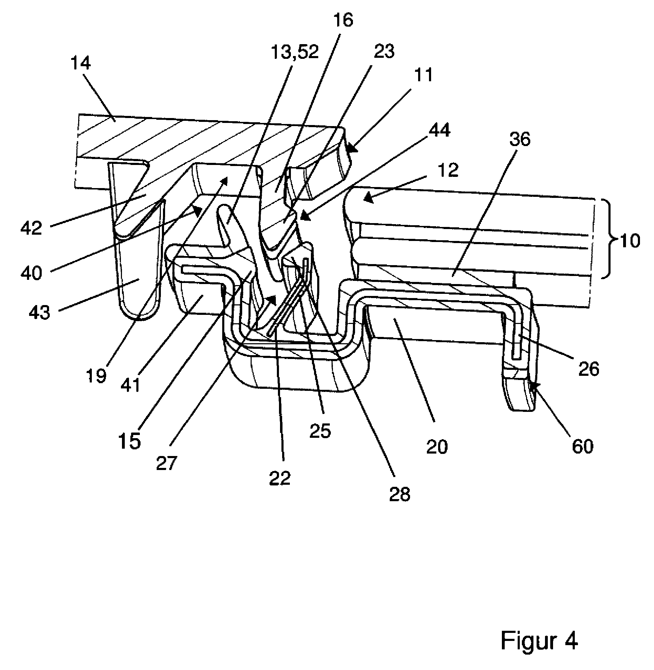

Figur 4 zeigt eine perspektivische Darstellung eines Querschnitts im Bereich eines Montageanschlags 43 aus Figur 1. Die Halteschiene 20 und die Abdeckung 14 sind noch nicht miteinander verrastet. Das Federelement 13 ist eine U-förmige Stütz- und Dichtlippe und in entspanntem Zustand 52.

Der Montageanschlag 43 ist in einem kleinen Bereich des Positionierungsanschlags 42 angeordnet und hat eine Tiefe von beispielsweise 4 mm. Der Montageanschlag 43 überragt den Positionierungsanschlag 42 um mehr als 50 % und hat beispielsweise eine Länge von 15 mm. Der Winkel des Montageanschlags 43 zur Lotrechten der Anlagefläche 19 der Abdeckung 14 ist geringer als der Winkel α zwischen Positionierungsanschlag 42 und Lotrechten. Der Montageanschlag ist insbesondere lotrecht zur Anlagefläche 19 angeordnet oder mit einem Winkel von beispielsweise 1° bis 20° zum Führungskanal 40 hin geneigt.

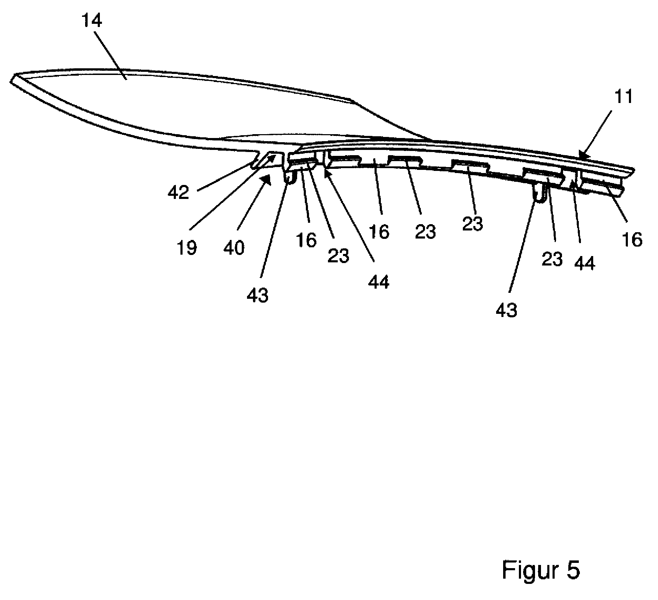

Figur 5 zeigt eine perspektivische Darstellung einer erfindungsgemäßen Ausgestaltung der Abdeckung 14. Die Rastschiene 16 weist beispielsweise zwei schlitzförmige Aussparungen 44 auf. Die Aussparungen 44 sind jeweils gegenüber einem auf dem gegenüberliegenden Schenkel des Führungskanals 40 angeordneten Montageanschlag 43 angeordnet. Des Weiteren weist die Rastschiene 16 Teilbereiche mit einem vorstehenden Bereich 23 und Teilbereiche ohne vorstehenden Bereich 23 auf. Die Rastschiene 16 ist in den Teilbereichen ohne vorstehenden Bereich 23 ohne Rastfunktion ausgeführt. Dies hat den besonderen Vorteil, dass die Montage der Abdeckung 14 in der Halteschiene 20 segmentweise erfolgt und beim Verrasten eines Teilbereichs ein deutliches akustisches Knacken vernommen werden kann. Gleichzeitig kann der Rastvorgang vom Monteur taktil erfasst werden.

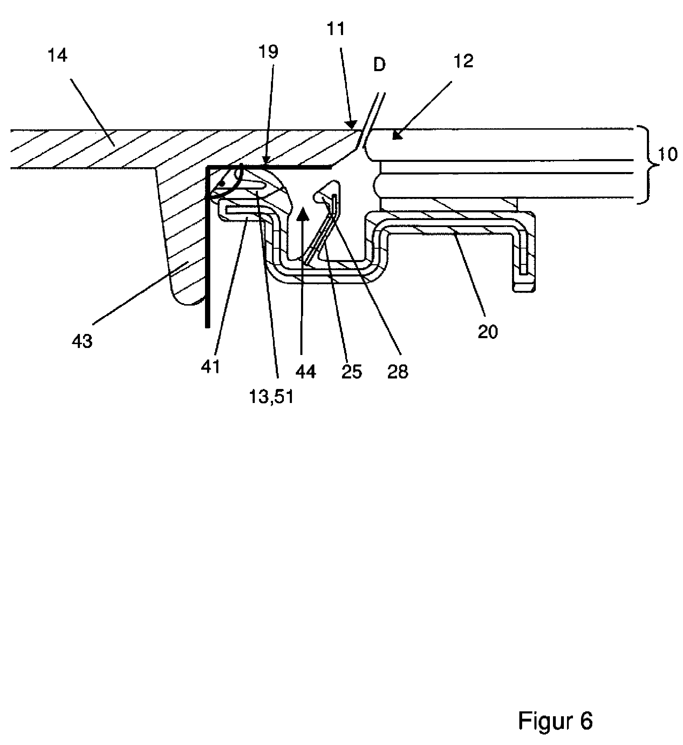

Figur 6 zeigt einen Querschnitt im Bereich eines Montageanschlags 43 entlang der Schnittlinie B-B' aus Figur 1. Der Montageanschlag 43 ist beispielsweise lotrecht zur Anlagefläche 19 an der Unterseite der Abdeckung 14 angeordnet. Auf der der Scheibe zugewandten Seite des Führungskanals 40 befindet sich eine Aussparung 44 in der Rastschiene 16. Die Aussparung 44 hat den besonderen Vorteil, dass beispielsweise bei einem Spritzguss der Abdeckung 14 ein Werkzeug zur Formung des Montageanschlags 43 durch die Aussparung 44 angreifen und gelöst werden kann. Dies ermöglicht eine besonders einfache und kostengünstige Herstellung der erfindungsgemäßen Abdeckung 14.

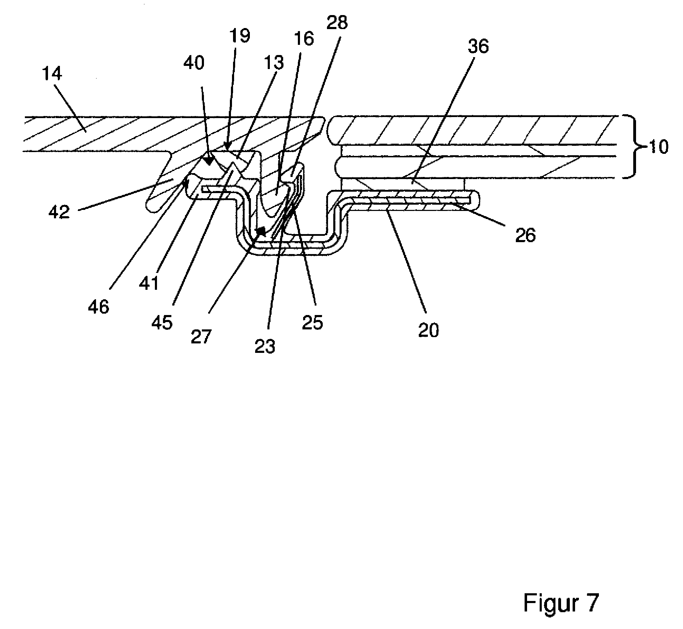

Figur 7 zeigt einen Querschnitt einer alternativen Ausgestaltung einer erfindungsgemäßen Abdichtungsanordnung. Im Unterschied zu Figur 2 ist das Federelement 13 als Vollmaterial ausgeführt. Des Weiteren ist das Federelement 13 mit der Anlagefläche 19 im Führungskanal 40 der Abdeckung 14 verbunden. Die Führungsschiene 41 weist im Bereich des Federelements 13 eine spitzenförmige Auswölbung 45 auf. Die spitzenförmige Auswölbung 45 ist in das Federelement 13 eingedrückt und bildet eine sichere Abdichtung gegen Feuchtigkeit und Wasser. Die Führungsschiene 41 weist eine Stützwölbung 46 auf, die an dem Positionierungsanschlag 42 anliegt. Dies ermöglicht eine genaue laterale Positionierung der Führungsschiene 41 im Führungskanal 40.

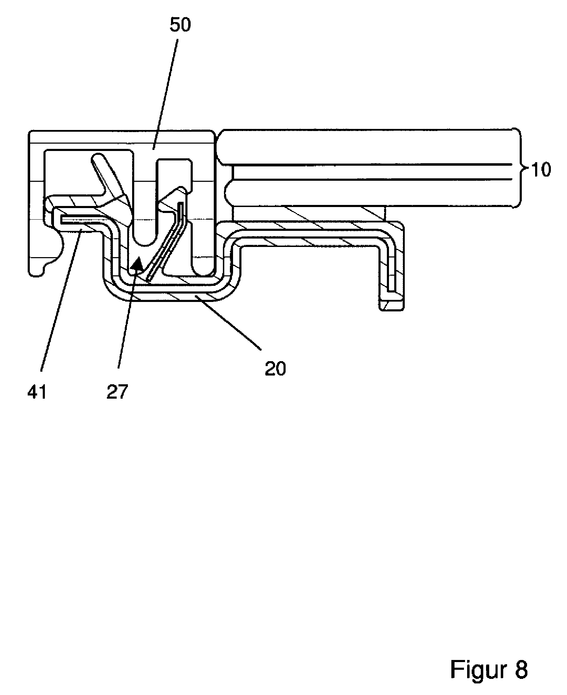

Figur 8 zeigt einen Querschnitt einer erfindungsgemäßen Halteschiene 20 an einer Scheibe 10 mit einem Montagekeder 50. Der Montagekeder 50 ist ortsfest zur Scheibe 10 positioniert. Ortsfest bedeutet hier, dass er eine ortsfeste Lage relativ zur Lage der Scheibe 10 aufweist. Der Montagekeder 50 ermöglicht eine genaue Positionierung der Halteschiene 20 zur Scheibe 10 vor dem Verkleben von Halteschiene 20 und Scheibe 10. Der Montagekeder 50 ist in den Rastkanal 27 eingebracht und dazu geeignet, die Führungsschiene 41 aufzunehmen. Der Montagekeder 50 kann während des Transports der Scheibe 10 zur endgültigen Montage am Fahrzeug an der Halteschiene 20 verbleiben und die Halteschiene 20 vor Beschädigungen schützen. Der Montagekeder 50 kann dann beispielsweise kurz vor Montage der Abdeckung 14 entfernt. Der Montagekeder 50 ist insbesondere ohne großen Kraftaufwand wieder entfernbar.

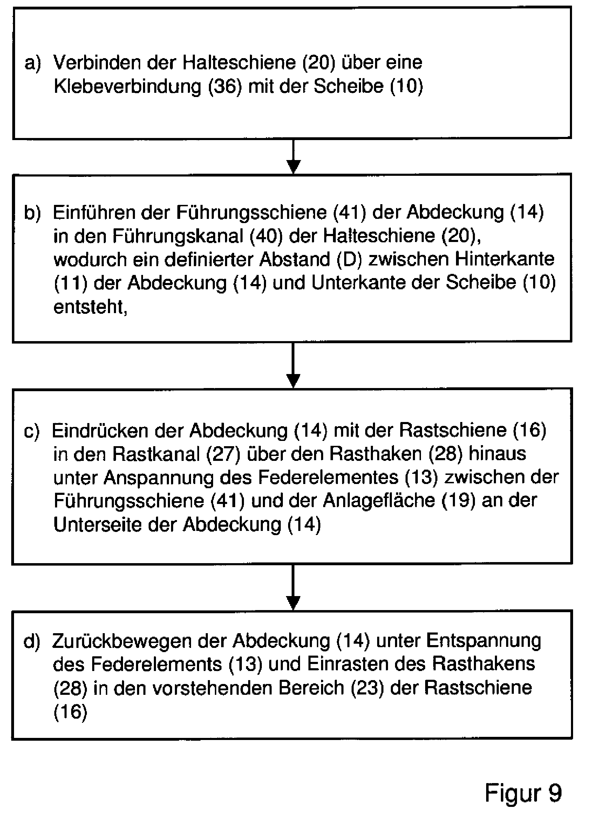

Figur 9 erklärt ausführlich die erfindungsgemäßen Verfahrensschritte zur Herstellung einer Abdichtungsanordnung. In einem ersten Schritt wird die Halteschiene 20 über eine Klebeverbindung 36 am unteren Rand 12 einer Scheibe 10 dauerhaft mit der Scheibe 10 verbunden. Dazu wird beispielsweise ein Montagekeder 50 verwendet, der die Position der Halteschiene 20 zur Unterkante der Scheibe 10 festlegt.

In einem nächsten Schritt wird die Abdeckung 14 an der Scheibe 10 angelegt. Dazu wird beispielsweise eine Seite der Abdeckung 14 so an der Halteschiene 20 angelegt, dass ein Montageanschlag 43 der Abdeckung 14 an der Führungsschiene 41 der Halteschiene 20 anliegt. Die Verwendung eines Montageanschlags 43 stellt sicher, dass die Führungsschiene 41 und Führungskanal 40 sowie Rastschiene 16 und Rastkanal 27 so zueinander angeordnet sind, dass sie beim Absenken der Abdeckung 14 auf die Halteschiene 20 passend ineinander gleiten. Dadurch wird insbesondere verhindert, dass die Rastschiene 16 außerhalb des Rastkanals 27 und zwischen Federschenkel 25 und Scheibe 10 eingeführt wird. Dies kann zu einer Verbiegung und Zerstörung des Federschenkels 25 führen kann.

In einem weiteren Schritt wird die Abdeckung 14 auf die Halteschiene 20 abgesenkt. Dabei wird die Führungsschiene 41 der Abdeckung 14 in den Führungskanal 40 der Halteschiene 20 eingeführt. Dadurch nehmen die Hinterkante 11 der Abdeckung 14 und untere Rand 12 der Scheibe 10 einen definierten Abstand D zueinander ein.

In einem weiteren Schritt wird die Abdeckung 14 mit der Rastschiene 16 in den Rastkanal 27 eingeführt. Dabei wird der vorstehende Bereich 23 der Rastschiene 16 über den Rasthaken 28 hinaus unter Anspannung des Federelementes 13 eingedrückt. Der Federschenkel 25 ist dabei so ausgebildet, dass der Rasthaken 28 während des Eindrückens durch eine Drehung des Federschenkels 25 um die Verbindungsstelle 22 zur Halteschiene 20 in Richtung Scheibe 10 ausweichen kann. Nachdem der vorstehende Bereich 23 an dem Rasthaken 28 vorbei gedrückt wurde, entspannt sich der Federschenkel 25 und bewegt den Rasthaken 28 in Richtung seiner ursprünglichen Position. Dies führt zu einer Verzahnung von Rasthaken 28 und vorstehendem Bereich 23.

In einem weiteren Schritt wird die Abdeckung 14 zurück, entgegen der Montagerichtung, bewegt und das Federelement 13 wird teilweise entspannt. Der vorstehende Bereich 23 übt über den Rasthaken 28 eine Zugspannung auf den Federschenkel 25 aus, wodurch die vertikale Position der Abdeckung 14 zur Halteschiene 20 und zu Scheibe 10 festgelegt wird.

Die vorliegende Erfindung hat eine Reihe von Vorteilen im Vergleich zu Anordnungen nach dem Stand der Technik. Bei Abdichtungsanordnungen nach dem Stand der Technik wird durch die Verrastung sowohl der laterale Abstand D zwischen Abdeckung und Scheibe, als auch der vertikale Abstand der Abdeckung und der Scheibe festgelegt. Die Verrastungsmittel nach dem Stand der Technik müssen elastisch ausgebildet sein, um einerseits die Verrastung zu ermöglichen und andererseits die Anordnung abzudichten. Dadurch ergeben sich eine Positionierungsungenauigkeiten und unerwünschte Toleranzen.

Bei der erfindungsgemäßen Abdichtungsanordnung ist der Verrastungsmechanismus, der durch den Rastkanal 27 und die Rastschiene 16 gebildet wird, von der Positionierung durch den Führungskanal 40 und die Führungsschiene 41 getrennt. Führungskanal 40 und Führungsschiene 41 legen den Abstand D zwischen Abdeckung 14 und Scheibe 10 fest. Der Verrastungsmechanismus fixiert die Abdeckung 14 und die Halteschiene 20 und damit die Führungsschiene 41 im Führungskanal 40. Da die Rastschiene 16 und der Federschenkel 25 nur durch eine Zugspannung belastet werden, können sie dünner und platzsparender als beim Stand der Technik ausgestaltet werden. Es ergibt sich eine unerwartete Kombination aus Platzersparnis, eine hohe Positionierungsgenauigkeit und einfachen Montage. Die hohen Anforderungen an die Fertigungstoleranzen und Montage können wesentlich besser erfüllt werden. Des Weiteren wird durch das elastische Federelement 13 im Führungskanal 40 eine verbesserte Abdichtung der Anordnung erzielt, wodurch auf zusätzliche Abdichtungsmaßnahmen verzichtet werden kann. Diese Vorteile waren für den Fachmann unerwartet und überraschend.

### Bezugszeichenliste

10 Scheibe
11 Hinterkante der Abdeckung 14
12 unterer Rand der Scheibe 10
13 Federelement, Stütz- und Dichtlippe
14 Abdeckung
15 Stützwölbung
16 Rastschiene
19 Anlagefläche
20 Halteschiene
22 Verbindungsstelle zwischen Federschenkel 15 und Halteschiene 20
23 vorstehender Bereich
25 Federschenkel
26 Versteifungs-Einlage
27 Rastkanal
28 Rasthaken
36 Klebeverbindung
40 Führungskanal
41 Führungsschiene
42 Positionierungsanschlag
43 Montageanschlag
44 Aussparung
45 Auswölbung
46 Stützwölbung
50 Montagekeder
51 Federelement 13 im gespannten Zustand
52 Federelement 13 im entspannten Zustand
60 Stützschenkel
A-A' Schnittlinie
B-B' Schnittlinie
D Abstand zwischen Hinterkante der Abdeckung 11 und unterem Rand 12 der Scheibe 10
L Länge des Positionierungsanschlags 42

## Patentansprüche

1. Abdichtungsanordnung für eine Fahrzeugscheibe, mindestens umfassend:
- eine Halteschiene (20) mit einem Rastkanal (27), der durch eine Führungsschiene (41) und einen Federschenkel (25) gebildet ist und die Halteschiene (20) an einer Scheibe (10) befestigt ist,
- eine Abdeckung (14) mit einem Führungskanal (40), der durch eine Rastschiene (16) und einen Positionierungsanschlag (42) gebildet ist, **dadurch gekennzeichnet, dass**
- im Führungskanal (40) die Führungsschiene (41) angeordnet ist und im Rastkanal (27) die Rastschiene (16) eingerastet ist, wobei ein Rasthaken (28) an dem Federschenkel (25) in einen vorstehenden Bereich (23) der Rastschiene (16) eingerastet ist und
- im Führungskanal (40) ein Federelement (13) zwischen einer Anlagefläche (19) an der Unterseite der Abdeckung (14) und der Führungsschiene (41) eingespannt ist.

2. Abdichtungsanordnung nach Anspruch 1, wobei das Federelement (13) mit der Führungsschiene (41) oder mit der Anlagefläche (19) verbunden ist.

3. Abdichtungsanordnung nach Anspruch 1 oder 2, wobei das Federelement (13) als Vollmaterial, als Hohlkammerprofil oder als U-förmiges Profil ausgeführt ist.

4. Abdichtungsanordnung nach einem der Ansprüche 1 bis 3, wobei das Federelement (13) Elastomere, thermoplastische Elastomere und bevorzugt Ethylen-Propylen-Dien-Kautschuk, Styrol-Butadien-Kautschuk, Polybutadien-Kautschuk, Nitrilkautschuk, Chloropren-Kautschuk, Fluorkautschuk, Silikonkautschuk, Polypropylen, Polyvinylchlorid, Acrylnitril-Butadien-Styrol, Copolymere und / oder Gemische davon enthält.

5. Abdichtungsanordnung nach einem der Ansprüche 1 bis 4, wobei der Führungskanal (40) mindestens einen Montageanschlag (43) und bevorzugt drei bis sieben Montageanschläge (43) aufweist.

6. Abdichtungsanordnung nach einem der Ansprüche 1 bis 5, wobei der Federschenkel (25) auslenkbar ist oder mit der Halteschiene (20) auslenkbar verbunden ist.

7. Abdichtungsanordnung nach einem der Ansprüche 1 bis 6, wobei der Federschenkel (25) in dem für die Auslenkung vorgesehenen Bereich eine Dicke von 0,2 mm bis 1 mm aufweist.

8. Abdichtungsanordnung nach einem der Ansprüche 1 bis 7, wobei ein Winkel (α) zwischen Positionierungsanschlag (42) und der Lotrechten zur Anlagefläche (19) von 0° bis 45°, bevorzugt von 2° bis 25° beträgt.

9. Abdichtungsanordnung nach einem der Ansprüche 1 bis 8, wobei die Halteschiene (20) und/oder die Führungsschiene (41) mindestens eine Verstärkungs-Einlage (26) enthält.

10. Abdichtungsanordnung nach einem der Ansprüche 1 bis 9, wobei der Federschenkel (25) in dem für die Auslenkung vorgesehenen Bereich eine Metallfolie enthält oder bevorzugt aus einer Metallfolie besteht.

11. Abdichtungsanordnung nach einem der Ansprüche 1 bis 10, wobei die Rastschiene (16) in Teilabschnitten Aussparungen (44) und / oder in Teilabschnitten keine vorstehenden Bereiche (23) aufweist.

12. Verfahren zur Herstellung einer Abdichtungsanordnung nach einem der Ansprüche 1 bis 11, wobei mindestens,
a) die Halteschiene (20) über eine Klebeverbindung (36) mit der Scheibe (10) dauerhaft verbunden wird,
b) die Führungsschiene (41) der Abdeckung (14) in den Führungskanal (40) der Halteschiene (20) eingeführt wird und ein definierter Abstand (D) zwischen Hinterkante (11) der Abdeckung (14) und unterem Rand (12) der Scheibe (10) entsteht,
c) die Abdeckung (14) mit der Rastschiene (16) in den Rastkanal (27) über den Rasthaken (28) hinaus unter Anspannung des Federelementes (13) zwischen der Führungsschiene (41) und der Anlagefläche (19) an der Unterseite der Abdeckung (14) eingedrückt wird,
d) die Abdeckung (14) unter Entspannung des Federelements (13) sich zurückbewegt und der Rasthaken (28) in den vorstehenden Bereich (23) der Rastschiene (16) eingerastet wird.

13. Verfahren nach Anspruch 12, wobei in Schritt (b) die Führungsschiene (41) an einem Montageanschlag (43) entlang geführt wird.

14. Verfahren nach Anspruch 12 oder 13, wobei die Abdeckung (14) mit der Halteschiene (20) segmentweise verbunden wird.

15. Verwendung der Abdichtungsanordnung nach einem der Ansprüche 1 bis 11, für eine Kraftfahrzeugscheibe, bevorzugt für eine Windschutzscheibe (10) oder Heckscheibe und insbesondere als Wasserkasten-Abdeckung.

## Claims

1. Sealing arrangement for a motor vehicle pane, comprising at least:
- a holding rail (20) having a locking channel (27) that is formed by a guide rail (41) and a resilient leg (25), wherein the holding rail (20) is fastened to a pane (10),
- a cover (14) having a guide channel (40) that is formed by a locking rail (16) and a positioning stop (42),
**Characterized in, that**
- the guide rail (41) is arranged in the guide channel (40) and the locking rail (16) is latched in the locking channel (27), wherein a locking hook (28) is latched onto the resilient leg (25) in a projecting region (23) of the locking rail (16), and
- a resilient element (13) is clamped in the guide channel (40) between a stop face (19) on the underside of the cover (14) and the guide rail (41).

2. Sealing arrangement according to claim 1, wherein the resilient element (13) is connected to the guide rail (41) or to the stop face (19).

3. Sealing arrangement according to claim 1 or 2, wherein the resilient element (13) is implemented as a solid material, as a hollow chamber profile, or as a U-shaped profile.

4. Sealing arrangement according to one of claims 1 through 3, wherein the resilient element (13) contains elastomers, thermoplastic elastomers, and preferably ethylene propylene diene rubber, styrene butadiene rubber, polybutadiene rubber, nitrile rubber, chloroprene rubber, fluorinated rubber, silicone rubber, polypropylene, polyvinyl chloride, acrylonitrile butadiene styrene, copolymers, and / or mixtures thereof.

5. Sealing arrangement according to one of claims 1 through 4, wherein the guide channel (40) has at least one assembly stop (43) and preferably three to seven assembly stops (43).

6. Sealing arrangement according to one of claims 1 through 5, wherein the resilient leg (25) is deflectable or is deflectably connected to the holding rail (20).

7. Sealing arrangement according to one of claims 1 through 6, wherein the resilient leg (25) has, in the region provided for the deflection, a thickness of 0.2 mm to 1 mm.

8. Sealing arrangement according to one of claims 1 through 7, wherein an angle (α) between the positioning stop (42) and the perpendicular to the stop face (19) is from 0° to 45°, preferably from 2° to 25°.

9. Sealing arrangement according to one of claims 1 through 8, wherein the holding rail (20) and/or the guide rail (41) contains at least one reinforcement insert (26).

10. Sealing arrangement according to one of claims 1 through 9, wherein, in the region provided for the deflection, the resilient leg (25) contains a metal foil or is preferably made from a metal foil.

11. Sealing arrangement according to one of claims 1 through 10, wherein the locking rail (16) has, in subsections, recesses (44) and / or, in subsections, no projecting regions (23).

12. Method for producing a sealing arrangement according to one of claims 1 through 11, wherein at least,
a) the holding rail (20) is durably bonded to the pane (10) by an adhesive connection (36),
b) the guide rail (41) of the cover (14) is introduced into the guide channel (40) of the holding rail (20), and a defined distance (D) is created between the rear edge (11) of the cover (14) and the bottom edge (12) the pane (10),
c) the cover (14) with the locking rail (16) is pressed into the locking channel (27) beyond the locking hook (28) under tensioning of the resilient element (13) between the guide rail (41) and the stop face (19) on the underside of the cover (14),
e) the cover (14) moves back under relaxation of the resilient element (13) and the locking hook (28) is latched into the projecting region (23) of the locking rail (16).

13. Method according to claim 12, wherein in step (b) the guide rail (41) is guided along on an assembly stop (43).

14. Method according to claim 12 or 13, wherein the cover (14) is connected, in segments, to the holding rail (20).

15. Use of the sealing arrangement according to one of claims 1 through 11, for a motor vehicle pane, preferably for a windshield (10) or a rear window and, in particular, as a water draining chamber cover.

## Revendications

1. Dispositif d'étanchéité pour une vitre de véhicule, qui comprend au moins:
- un rail de support (20) avec un canal d'encliquetage (27), qui est formé par un rail de guidage (41) et une branche de ressort (25) et le rail de support (20) est fixé sur une feuille de verre (10),
- une couverture (14) avec une rainure de guidage (40), qui est formée par un rail de verrouillage (16) et une butée de positionnement (42),
**caractérisée en ce que**
- le rail de guidage (41) est disposé dans la rainure de guidage (40) et le rail de verrouillage (16) est engagé dans le canal d'encliquetage (27), où un crochet d'engagement (28) à la branche de ressort (25) est engagé dans une zone de saillie du rail de verrouillage (16) et,
- un élément à ressort (13) est fixé dans la rainure de guidage (40) entre une surface d'appui (19) sur le dessous du couvercle (14) et le rail de guidage (41).

2. Dispositif d'étanchéité selon la revendication 1, où l'élément à ressort (13) est connecté au rail de guidage (41) ou à la surface d'appui (19).

3. Dispositif d'étanchéité selon la revendication 1 ou 2, où l'élément à ressort (13) est réalisé comme matériau massif, comme profilé à chambre creuse ou comme profile en forme de U.

4. Dispositif d'étanchéité selon l'une des revendications 1 à 3, où l'élément à ressort (13) contient des élastomères, des élastomères thermoplastiques et de préférence du caoutchouc éthylène-propylène-diène, du caoutchouc styrène-butadiène, du polybutadiène, du caoutchouc nitrile, du caoutchouc chloroprène, du caoutchouc de fluor, du caoutchouc de silicone, du polypropylène, du polychlorure de vinyle, de l'acrylonitrile-butadiène-styrène, ainsi que des copolymères et/ou des mélanges contenant ceux-ci.

5. Dispositif d'étanchéité selon l'une des revendications 1 à 4, où la rainure de guidage (40) présente au moins une butée de montage (43) et de préférence entre trois et sept attaches (43) de montage.

6. Dispositif d'étanchéité selon l'une des revendications 1 à 5, où la branche de ressort (25) peut être déviée ou connecté au rail de support (20) de façon à pouvoir être dévié.

7. Dispositif d'étanchéité selon l'une des revendications 1 à 6, où la branche de ressort (25) présente une épaisseur de 0,2 mm à 1 mm dans la région prévue pour la déviation.

8. Dispositif d'étanchéité selon l'une des revendications 1 à 7, où un angle (α) entre les butées de positionnement (42) et l'équerre par rapport à la surface de contact (19) est de 0° à 45°, de préférence de 2° à 25°.

9. Dispositif d'étanchéité selon l'une des revendications 1 à 8, où le rail de support (20) et/ou le rail de guidage (41) contient au moins un renfort (26).

10. Dispositif d'étanchéité selon l'une des revendications 1 à 9, où la branche de ressort (25) contient une feuille en métal dans la région prévue pour la déviation ou de préférence se compose d'une feuille métallique.

11. Dispositif d'étanchéité selon l'une des revendications 1 à 10, où le rail de verrouillage (16) présente par sections des cavités (44) et/ou par sections aucune zone en saillie (23).

12. Procédure de fabrication d'un dispositif d'étanchéité selon l'une des revendications 1 à 11, où au moins,
a) le rail de support (20) est connecté en permanence avec la vitre (10) par une connexion adhésive (36),
b) le rail de guidage (41) de la couverture (14) est introduit dans la rainure de guidage (40) du rail de support (20) et crée une distance définie (D) entre le bord arrière (11) de la couverture (14) et du bord inférieur (12) de la feuille de verre,
c) la couverture (14) avec le rail de verrouillage (16) est appuyé dans le canal d'encliquetage (27) au-delà du crochet d'engagement (28) entre le rail de guidage (41) et de la surface d'appui (19) sur le dessous de (14),
d) la couverture (14) recule par la relaxation de la tension de l'élément de ressort (13), et le crochet d'engagement (28) s'engage dans la partie en saillie (23) du rail de verrouillage (16).

13. Procédé selon la revendication 12, où lors de l'étape (b) le rail de guidage (41) est conduit le long d'une butée de montage (43).

14. Procédé selon la revendication 12 ou 13, où la couverture (14) est reliée par segments au rail de fixation (20).

15. Utilisation d'un dispositif d'étanchéité selon l'une des revendications 1 à 11 pour une vitre de véhicule, de préférence un pare-brise (10) ou lunette arrière et en particulier comme couverture d'un compartiment à eau.
